# EUROPEAN PATENT APPLICATION

(11) **EP 4 550 564 A1**
(43) Date of publication of application: **07.05.2025**
(21) Application number: 23830903.3
(22) Date of filing: 24.05.2023
(51) Int. Cl.: H01M 50/533, H01M 50/107, H01M 50/152, H01M 50/538, H01M 50/545, H01M 50/548, H01M 50/559, H01M 50/566

(54) **CYLINDRICAL BATTERY**

(30) Priority: 30.06.2022 JP 2022106661
(71) Applicant: Panasonic Energy Co., Ltd., Osaka 570-8511 (JP)
(72) Inventor: UEDA, Tomomichi, Kadoma-shi, Osaka 571-0057 (JP); TAKENO, Mitsuhiro, Kadoma-shi, Osaka 571-0057 (JP)
(74) Representative: Eisenführ Speiser
(86) International application number: PCT/JP2023/019299
(87) International publication number: WO 2024/004451

(57) **Abstract**

This cylindrical battery (10) comprises: an outer container which has the shape of a bottomed tube and accommodates an electrode body; a terminal cap (27); a plurality of cathode leads which extend out of the electrode body (14); and an upper current collector plate (50) to which the plurality of cathode leads are connected. The upper current collector plate (50) has a protruding portion (61) which protrudes towards the terminal cap (27) in the axial direction, and the terminal cap (27) has a recessed portion (71) which accommodates at least the tip of the protruding portion (61). Part of the protruding portion (61) at the tip and part of the bottom surface of the recessed portion (71) are connected by a connecting part (75). Between the protruding portion (61) and the recessed portion (71), there is a first passage portion (76) which is radially adjacent to the connecting part (75) and a second passage portion (77) which is linked to the reverse side of the first passage portion (76) from the connecting part in the radial direction and has a maximum axial length that is smaller than the maximum axial length of the first passage portion (76).

## Description

### TECHNICAL FIELD

The present disclosure generally relates to a cylindrical battery.

### BACKGROUND ART

Among conventional cylindrical batteries, there is a cylindrical battery disclosed in PATENT LITERATURE 1. The cylindrical battery comprises an exterior housing can, an electrode assembly that is housed in the exterior housing can, two positive electrode leads that are led from a positive electrode of the electrode assembly toward one side in an axial direction in a state of being spaced from each other in a winding direction of the positive electrode, a current collector plate to which the two positive electrode leads are connected, and a terminal cap to which the current collector plate is electrically connected. In the cylindrical battery, current collection is performed using the two positive electrode leads, which makes it possible to shorten a current collecting path and reduce electric resistance.

### CITATION LIST

### PATENT LITERATURE

PATENT LITERATURE 1: International Publication No. 2016/098291

### SUMMARY

When the current collector plate to which a plurality of leads are connected is directly joined to the terminal cap, the electric resistance can be further reduced (note that, this configuration is neither a known art nor a prior art). Even if flame is generated due to heat when the current collector is joined to the terminal cap, as long as the flame can be extinguished in a short time, the cylindrical battery can be provided with high quality, which is thus preferable. It is an advantage of the present disclosure to provide a cylindrical battery that can easily reduce electric resistance and has high flame extinguishing performance.

In order to solve the above-described problem, a cylindrical battery according to the present disclosure comprises an electrode assembly, a bottomed cylindrical exterior housing can that houses the electrode assembly, a terminal cap that has a terminal exposed to an outside, a plurality of electrode leads that extend from the electrode assembly, and a current collector plate to which the plurality of electrode leads are joined, wherein the current collector plate has a protruding portion that projects on the terminal cap side in an axial direction, and the terminal cap has a recessed portion that houses at least a tip side of the protruding portion, a joint portion is provided that joins a part on the tip side of the protruding portion and a part of a bottom surface of the recessed portion, and a first passage portion and a second passage portion are provided between the protruding portion and the recessed portion, the first passage portion being radially adjacent to the joint portion, the second passage portion communicating with an opposite side to the joint portion side in the radial direction with respect to the first passage portion and having a maximum length in the axial direction smaller than a maximum length in the axial direction of the first passage portion.

According to the cylindrical battery according to the present disclosure, electric resistance can be easily reduced and flame extinguishing performance can be improved.

### BRIEF DESCRIPTION OF DRAWING

FIG. 1 is an axial sectional view of a cylindrical battery according to an embodiment of the present disclosure.
FIG. 2 is a perspective view illustrating an electrode assembly and a part of positive electrode leads.
FIG. 3 is a perspective view of the cylindrical battery taken along a plane including a central axis.
FIG. 4 is an enlarged schematic sectional view of a part around a protruding portion in the cylindrical battery.
FIG. 5 is an enlarged schematic sectional view corresponding to FIG. 4 in a cylindrical battery of a modified example.
FIG. 6 is an enlarged schematic sectional view corresponding to FIG. 4 in a cylindrical battery of another modified example.

### DESCRIPTION OF EMBODIMENTS

Hereinafter, an embodiment of a cylindrical battery of the present disclosure will be described in detail with reference to the drawings. The cylindrical battery of the present disclosure may be a primary battery, or may be a secondary battery. Additionally, the cylindrical battery may be a battery using an aqueous electrolyte, or may be a battery using a non-aqueous electrolyte. In the following, a non-aqueous electrolyte secondary battery (lithium ion battery) using a non-aqueous electrolyte will be exemplified as a cylindrical battery 10 of an embodiment, but the cylindrical battery of the present disclosure is not limited to this.

In a case where a plurality of embodiments and modified examples and the like are included in the following description, it is assumed from the beginning that a new embodiment is constructed by appropriately combining those feature portions. In the following embodiments, the same components are denoted by the same reference numerals in the drawings, and duplicate descriptions are omitted. Schematic diagrams are included in a plurality of the drawings, and the dimensional ratios such as lengths, widths and heights of each member between different drawings are not necessarily the same. In this specification, a sealing assembly 17 side in an axial direction (height direction) of a cylindrical battery 10 is defined as "upper", and a bottom plate portion 68 side of an exterior housing can 16 in the axial direction is defined as "lower". Of the components described below, components that are not described in the independent claim indicating the highest level concept are any components, and are not essential components.

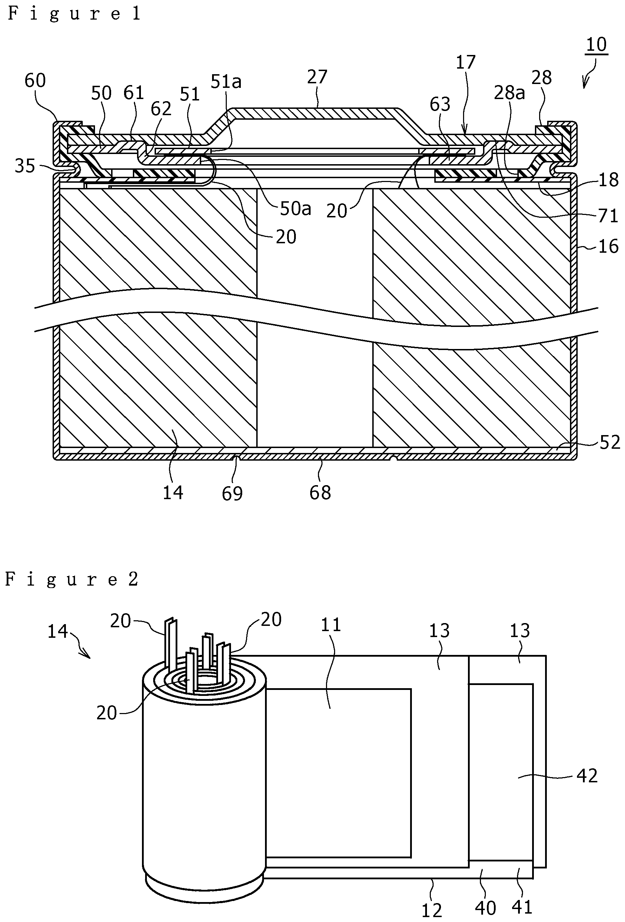

FIG. 1 is an axial sectional view of the cylindrical battery 10 according to an embodiment of the present disclosure. As illustrated in FIG. 1, the cylindrical battery 10 comprises a wound-type electrode assembly 14, a non-aqueous electrolyte (not illustrated), a bottomed cylindrical exterior housing can 16 that houses the electrode assembly 14 and the non-aqueous electrolyte, and a sealing assembly 17 with which an opening of the exterior housing can 16 is capped.

The non-aqueous electrolyte includes a non-aqueous solvent, and an electrolyte salt dissolved in the non-aqueous solvent. Examples of the non-aqueous solvent may include esters, ethers, nitriles, amides, and mixed solvents containing two or more selected from the foregoing. The non-aqueous solvent may contain a halogen-substituted product obtained by substituting at least some of hydrogen atoms in these solvents with a halogen atom such as fluorine. Note that the non-aqueous electrolyte is not limited to a liquid electrolyte and may be a solid electrolyte that uses a gel polymer or the like. As the electrolyte salt, a lithium salt such as LiPF₆ is used.

FIG. 2 is a perspective view illustrating the electrode assembly 14 and a part of positive electrode leads 20. As illustrated in FIG. 2, the electrode assembly 14 has an elongated positive electrode 11, an elongated negative electrode 12, and two elongated separators 13, and has a wound structure in which the positive electrode 11 and the negative electrode 12 are wound with the separators 13 each interposed between the positive electrode 11 and the negative electrode 12. A plurality of positive electrode leads are joined to the positive electrode 11 at intervals in a longitudinal direction of the positive electrode 11 so as to be electrically connected to the positive electrode 11, and for example, as illustrated in FIG. 2, eight positive electrode leads 20 are joined to the positive electrode 11 at approximately equal intervals in the longitudinal direction. The positive electrode lead 20 is an example of an electrode lead.

The negative electrode 12 is formed to be one size larger than the positive electrode 11 in order to prevent precipitation of lithium. That is, the negative electrode 12 is formed to be longer in the longitudinal direction and the width direction (short direction) than the positive electrode 11. The two separators 13 are each formed to be at least one size larger than the positive electrode 11, and are disposed so as to interpose the positive electrode 11 therebetween. The separators 13 projects upward from the positive electrode 11 and the negative electrode 12, and the negative electrode 12 projects downward from the positive electrode 11 and the separators 13.

The negative electrode 12 has a negative electrode current collector exposed portion 41 in which a negative electrode mixture layer 42 is not provided in a negative electrode current collector 40 at an axial lower end portion from a winding start end to a winding finish end in the longitudinal direction of the elongated negative electrode 12. Therefore, the axial lower end portion of the electrode assembly 14 is included in the negative electrode current collector exposed portion 41. The negative electrode 12 may include the winding start end of the electrode assembly 14. However, the separator 13 generally extend beyond a winding start-side end of the negative electrode 12, and the winding start-side end of the separator 13 serves as a winding start end of the electrode assembly 14.

The positive electrode 11 has a positive electrode current collector and a positive electrode mixture layer formed on each surface of the positive electrode current collector. Examples of the positive electrode current collector may include a foil of metal such as aluminum or an aluminum alloy, which is stable within a potential range of the positive electrode 11, and a film in which such a metal is disposed on a surface layer thereof. The positive electrode mixture layer includes a positive electrode active material, a conductive agent, and a binder. The positive electrode 11 can be produced by, for example, applying a positive electrode mixture slurry including a positive electrode active material, a conductive agent, a binder, and the like on a positive electrode current collector, drying the resulting coating film, and then compressing the coating film to form a positive electrode mixture layer on each surface of the positive electrode current collector.

The positive electrode active material is composed of a lithium-containing metal composite oxide as a main component. Examples of metal elements contained in the lithium-containing metal composite oxide include Ni, Co, Mn, Al, B, Mg, Ti, V, Cr, Fe, Cu, Zn, Ga, Sr, Zr, Nb, In, Sn, Ta, and W. An example of a preferable lithium-containing metal composite oxide is a composite oxide containing at least one of Ni, Co, Mn and Al.

Examples of the conductive agent included in the positive electrode mixture layer may include carbon materials such as carbon black, acetylene black, Ketjen black, and graphite. Examples of the binder included in the positive electrode mixture layer may include fluorocarbon resins such as polytetrafluoroethylene (PTFE) and polyvinylidene fluoride (PVdF), polyacrylonitrile (PAN), polyimide resins, acrylic resins, and polyolefin resins. These resins may be used in combination with cellulose derivatives such as carboxymethyl cellulose (CMC) or a salt thereof, a polyethylene oxide (PEO), or the like.

The positive electrode 11 has positive electrode current collector exposed portions that are disposed at approximately equal intervals in the longitudinal direction of the positive electrode 11 and the number of which is the same as the number of positive electrode leads 20. The positive electrode leads 20 is joined to the respective positive electrode current collector exposed portions. The plurality of positive electrode leads 20 are joined at intervals in the longitudinal direction of the band-shaped positive electrode current collector, and is preferably joined at approximately equal intervals in the longitudinal direction, which makes it possible to shorten a current path in the longitudinal direction of the positive electrode 11 and reduce internal resistance of the cylindrical battery 10. The positive electrode leads 20 are covered by, for example, insulating tapes (not illustrated), resulting in suppression of a short circuit between the positive electrode 11 and the negative electrode 12. The insulating tapes preferably cover all of the positive electrode current collector exposed portions.

As illustrated in FIG. 2, the negative electrode 12 has the negative electrode current collector 40 and the negative electrode mixture layer 42 formed on each surface of the negative electrode current collector 40. Examples of the negative electrode current collector 40 may include a foil of a metal such as copper or a copper alloy, which is stable within a potential range of the negative electrode 12, and a film in which such a metal is disposed on a surface layer thereof. The negative electrode mixture layer 42 includes a negative electrode active material, and a binder. The negative electrode 12 can be produced by, for example, applying a negative electrode mixture slurry including a negative electrode active material, a binder, and the like on a negative electrode current collector 40, drying the resulting coating film, and then compressing the coating film to form a negative electrode mixture layer 42 on each surface of the negative electrode current collector 40.

As the negative electrode active material, a carbon material that reversibly occludes and releases lithium ions is generally used. A preferable carbon material is graphite including natural graphite such as flaky graphite, massive graphite, and earthy graphite, and artificial graphite such as massive artificial graphite and graphitized mesophase carbon microbeads. As the negative electrode active material, a silicon (Si) material containing Si may be included in the negative electrode mixture layer 42. As the negative electrode active material, a metal alloyed with lithium other than Si, an alloy containing such a metal, a compound containing such a metal, and the like may be used.

As the binder included in the negative electrode mixture layer 42, fluorocarbon resins, PAN, polyimide resins, acrylic resins, polyolefin resins, and the like may be used as in the case of the positive electrode 11, and a styrene-butadiene rubber (SBR) or a modification thereof is preferably used. In the negative electrode mixture layer, for example, in addition to SBR and the like, CMC or a salt thereof, polyacrylic acid (PAA) or a salt thereof, polyvinyl alcohol, or the like may be included.

A porous sheet having ion permeability and an insulation property is used as the separator 13. Specific examples of the porous sheet include a microporous thin film, a woven fabric, and a nonwoven fabric. The material of the separator 13 is preferably a polyolefin resin such as polyethylene or polypropylene, or a cellulose. The separator 13 may be either a single layer structure or a laminated structure. A heat-resistant layer or the like may be formed on a surface of the separator 13.

As illustrated in FIG. 1, the cylindrical battery 10 comprises an annular insulating plate 18 on an upper side of the electrode assembly 14. The positive electrode leads 20 attached to the positive electrode 11 extend toward the sealing assembly 17 through a through hole of the insulating plate 18. The sealing assembly 17 has an upper current collector plate 50 and a terminal cap 27. The upper current collector plate 50 is an annular metal plate member, and has a through hole 50a at a radial center portion.

The terminal cap 27 is a metal plate-like member that has no through hole, and is located on the axially upper side of the sealing assembly 17. An end surface on the axially upper side of the terminal cap 27 is exposed to the outside except for an outer edge portion, and the exposed portion constitutes a positive electrode terminal. The sealing assembly 17 further has a metal plate 51. The metal plate 51 is an annular metal member. The metal plate 51 has a through hole 51a formed as a cylindrical hole.

Each positive electrode lead 20 is bent along an upper surface of the upper current collector plate 50 from the positive electrode 11 through the through hole 50a in the upper current collector plate 50. A tip portion of each positive electrode lead 20 is in a state being sandwiched between the upper surface of the upper current collector plate 50 and a lower surface of the metal plate 51. Each positive electrode lead 20 is joined to the upper surface of the upper current collector plate 50. The upper current collector plate 50 and the metal plate 51 are also joined to each other, and each positive electrode lead 20 and the metal plate 51 are also joined to each other. These joining operations can be achieved by, for example, applying laser light from a side opposite to a side of the upper current collector plate 50 in a thickness direction of the metal plate 51 to perform laser welding in a state in which the tip portion of each positive electrode lead 20 is sandwiched between the upper current collector plate 50 and the metal plate 51. Laser welding in the state in which the tip portions of the positive electrode leads 20 are sandwiched between the upper current collector plate 50 and the metal plate 51 makes it possible to securely and easily weld and join the positive electrode lead 20 to the upper current collector plate 50. Note that the upper current collector plate 50 need not be joined to the metal plate 51, and the positive electrode leads 20 need not be joined to the metal plate 51. Furthermore, the cylindrical battery need not have the metal plate.

The upper current collector plate 50 has a first annular portion 60 that is located on a radially outward side and extends radially, an annular protruding portion 61 that is connected to an end portion on a radially inward side of the first annular portion 60 to project toward an axially upward side with respect to the end portion, and a second annular portion 63 that continues to the annular protruding portion 61 via an annular step portion 62 extending downward from the annular protruding portion 61 and extends toward a radially inward side from the step portion 62. The terminal cap 27 has an annular recessed portion 71 in which at least tip side of the annular protruding portion 61 is housed.

The cylindrical battery 10 comprises a metal lower current collector plate 52 on an axially lower side of the electrode assembly 14. Referring to FIGS. 1 and 2, the laser light is applied from a lower surface side of the lower current collector plate 52 in a state in which the electrode assembly 14 is pressed against an upper surface of the lower current collector plate 52 so as to fold the band-shaped negative electrode current collector exposed portion 41 toward the radially inward side, so that the negative electrode current collector exposed portion 41 is joined to the upper surface of the lower current collector plate 52 by laser welding over a wide area. The laser light is applied from a lower side of the exterior housing can 16 so that the bottom plate portion 68 of the exterior housing can 16 is joined to the lower current collector plate 52 by laser welding. This enables the negative electrode 12 of the electrode assembly 14 to be electrically connected to the exterior housing can 16 via the lower current collector plate 52. The negative electrode current collector exposed portion 41 is joined to the upper surface of the lower current collector plate 52 over the wide area, which makes it possible to prevent the current from flowing for a long distance along the longitudinal direction of the elongated negative electrode 12 and reduce the electric resistance of the cylindrical battery 10.

The exterior housing can 16 has an annular grooved portion 35 in a part in the axial direction of a cylindrical outer circumferential surface. The grooved portion 35 can be formed by, for example, recessing a part of the cylindrical outer circumferential surface toward the radially inward side by a radially inward spinning process. The sealing assembly 17 is disposed above the grooved portion 35, and is fixed by crimping to an opening portion of the exterior housing can 16 with a gasket 28 interposed between the sealing assembly 17 and the grooved portion 35.

A portion between the exterior housing can 16 and the sealing assembly 17 is sealed by the annular gasket 28, so that an internal space of the cylindrical battery 10 is closed. The gasket 28 is held between the exterior housing can 16 and the sealing assembly 17, and insulates the sealing assembly 17 from the exterior housing can 16. The gasket 28 has a role of a seal material for maintaining the airtightness of the inside of the battery, and a role as an insulating material for insulating the sealing assembly 17 from the exterior housing can 16. Note that the gasket 28 may have a through hole 28a. Adjusting the size and shape of the through hole 28a provided in the gasket 28 makes it possible to adjust a local strength (elastic force) of the gasket 28.

The cylindrical battery 10 has a thin thickness portion 69 in the bottom plate portion 68 of the exterior housing can 16. The thin thickness portion 69 is formed by providing a recess in circular, C-shape and the like in the bottom plate portion 68. Providing the thin thickness portion 69 in the bottom plate portion 68 enables the bottom plate portion 68 to smoothly rupture from the thin thickness portion 69 at the time of occurrence of the abnormal heat generation in the cylindrical battery 10. Therefore, at the time of occurrence of the abnormal heat generation in the cylindrical battery 10, high-temperature gas in the battery can be smoothly discharged to the outside and the safety of the cylindrical battery 10 can be improved.

The negative electrode current collector exposed portion 41 of the electrode assembly 14 is joined to the lower current collector plate 52, and the positive electrode leads 20 extending from the electrode assembly 14 are joined to the upper current collector plate 50. Then, the insulating plate 18 is disposed between the electrode assembly 14 and the upper current collector plate 50. Subsequently, the assembly including the electrode assembly 14, the upper current collector plate 50, and the lower current collector plate 52 are inserted into the exterior housing can 16 before crimping from the lower current collector plate 52 side. At this time, a part of the gasket 28 is located between the exterior housing can 16 and the sealing assembly 17.

Then, the electrolyte solution is injected into the exterior housing can 16 before crimping, and subsequently, the terminal cap 27 is disposed on the upper side of the upper current collector plate 50 so that the tip side of the protruding portion 61 of the upper current collector plate 50 is housed in the recessed portion 71. Then, the above-described crimping is performed to close the opening in the exterior housing can 16. Finally, in order to increase the electric conductivity, the laser light is applied from an axially outer side of the terminal cap 27 to laser-weld the terminal cap 27 and the upper current collector plate 50.

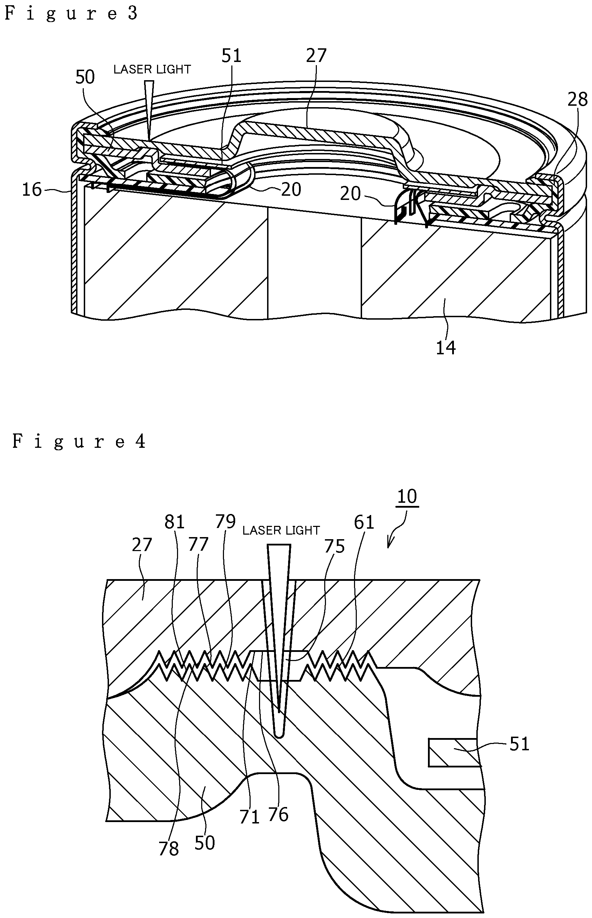

Specifically, as illustrated in FIG. 3, that is, the perspective view of the cylindrical battery 10 taken along a plane including a central axis, the laser light is applied to a radial position corresponding to a radially central position of the annular recessed portion 71 from the axially outward side of the terminal cap 27 in a circular motion, and the radial center portion of the recessed portion 71 and the radial center portion of the tip surface of the protruding portion 61 are joined by laser welding. This laser welding can provide good electrical conductivity between the terminal cap 27 and the upper current collector plate 50.

At least the tip side of the protruding portion 61 provided in the upper current collector plate 50 is housed in the recessed portion 71 of the terminal cap 27, which makes it possible to easily bring the upper current collector plate 50 into contact with the terminal cap 27, so that the upper current collector plate 50 and the terminal cap 27 can be securely joined by laser welding. At least the tip side of the protruding portion 61 is housed in the recessed portion 71, which makes it possible to construct a labyrinth structure between the protruding portion 61 and the recessed portion 71 and difficult for the electrolyte solution to enter between the protruding portion 61 and the recessed portion 71. Therefore, the cylindrical battery 10 can be prevented from deteriorating resulting from the electrolyte solution that has entered between the protruding portion 61 and the recessed portion 71. Furthermore, this makes it difficult for a hydrocarbon generated by the vaporization of the electrolyte solution to enter between the protruding portion 61 and the recessed portion 71, so that the hydrocarbon can be burned during the laser welding to prevent the flame from being generated and the high-quality cylindrical battery 10 can be produced.

In the cylindrical battery 10, the terminal cap 27 electrically connected to the plurality of positive electrode leads 20 serves as a positive electrode terminal, and the exterior housing can 16 electrically connected to the negative electrode current collector exposed portion 41 serves as a negative electrode terminal. Note that since the upper current collector plate 50 has the annular step portion 62 extending toward the axially lower side from the protruding portion 61, an axial gap can be provided between the second annular portion 63 and the terminal cap 27. Therefore, the positive electrode leads 20 and the metal plate 51 can be disposed in the axial gap.

Next, a detailed structure around the protruding portion 61 in the cylindrical battery 10 will be described. FIG. 4 is an enlarged schematic sectional view of a part around the protruding portion 61 in the cylindrical battery 10. Note that in FIG. 4, and FIGS. 5 and 6 used below, for ease of understanding, an axial length of a gap generated between the protruding portion 61 of the upper current collector plate 50 and the recessed portion 71 of the terminal cap is exaggerated and the characteristic of the shape of the gap is exaggerated.

As illustrated in FIG. 4, the cylindrical battery 10 has a joint portion 75 that joins a part on the tip side of the protruding portion 61 and a part of a bottom surface of the recessed portion 71. The cylindrical battery 10 has a first passage portion 76 and a second passage portion 77 between the protruding portion 61 and the recessed portion 71, the first passage portion 76 being radially adjacent to the joint portion 75, the second passage portion 77 communicating with the opposite side to the joint portion 75 side in the radial direction with respect to the first passage portion 76 and having a maximum length in the axial direction smaller than a maximum length in the axial direction of the first passage portion 76. With this configuration, the cylindrical battery 10 has the first passage portion 76 and the second passage portion 77 between the protruding portion 61 and the recessed portion 71. The first passage portion 76 is radially adjacent to the joint portion 75. The second passage portion 77 communicates with the first passage portion 76 on the opposite side to the joint portion 75 with respect to the first passage portion 76. A length of a part having the largest axial length in the second passage portion 77 is smaller than a length of a part having the largest axial length in the first passage portion 76.

As illustrated in FIG. 4, in a cross section including the axial direction of the cylindrical battery 10, the first passage portion 76 and the second passage portion 77 are provided on both sides in the radial direction of the joint portion 75. In the exemplified configuration in FIG. 4, the joint portion 75, the first passage portion 76, and the second passage portion 77 extend in a circle as seen from the radial direction of the cylindrical battery 10. As illustrated in FIG. 4, in the cross section including the axial direction of the cylindrical battery 10, the second passage portion 77 includes a passage part 81 surrounded by a zigzag-formed first line 78 that repeats irregularities and a zigzag-formed second line 79 that repeats irregularities. The protruding portion of the first line 78 faces the recessed portion of the second line 79 in the axial direction, and the recessed portion of the first line 78 faces the protruding portion of the second line 79 in the axial direction. Therefore, the passage part 81 becomes a zigzag-formed passage portion that proceeds in a zigzag pattern.

In other words, each of the terminal cap 27 and the upper current collector plate 50 has a projection and recess surface in which projections and recesses are alternately repeated in the radial direction. Then, the projection and recess surface of the terminal cap 27 faces the projection and recess surface of the upper current collector plate 50 in the axial direction so that the projection and recess surface of the terminal cap 27 is fitted in the projection and recess surface of the upper current collector plate 50 to form the passage part 81 that proceeds in a zigzag pattern between the two projection and recess surfaces. The projection and recess surface of each of the terminal cap 27 and the upper current collector plate 50 is formed by, for example, pressing or polishing.

Note that in the present embodiment, the passage part 81 that proceeds in a zigzag pattern is formed in the entire region in the radial direction of the second passage portion 77, and the second passage portion 77 coincides with the passage part 81 that proceeds in a zigzag pattern. However, the passage part that proceeds in a zigzag pattern may be provided in only a part in the radial direction of the second passage portion. The exemplified configuration has been described in which the joint portion 75, the first passage portion 76, and the second passage portion 77 extend in a circle as seen from the radial direction of the cylindrical battery 10, but the joint portion 75 is not necessarily formed in a circular shape. For example, a plurality of joint portions may be formed in a circular-arc shape. Note that in a case where a plurality of joint portions are provided, the first passage portion and the second passage portion are provided so as to correspond to each of the plurality of joint portions.

As described above, since laser welding for joining the terminal cap 27 and the upper current collector plate 50 is performed after the electrolyte solution is injected, an ignition risk occurs due to the laser light applied to a portion where the electrolyte solution exists. Here, in a case where the temperature of a wall in the vicinity of the portion where the ignition occurs is low with respect to a phenomenon in which the ignition occurs resulting from a heat source, the flame extinguishing phenomenon occurs in which the heat of the flame is absorbed by the wall not to cause the burning to be continued.

In the related background, according to the present embodiment, the cylindrical battery 10 comprises the bottomed cylindrical exterior housing can 16 that houses the electrode assembly 14, the terminal cap 27, a plurality of positive electrode leads 20 that extend from the electrode assembly 14, and the upper current collector plate 50 to which the plurality of positive electrode leads 20 are joined. The upper current collector plate 50 has the protruding portion 61 that projects toward the terminal cap 27 side in the axial direction and has the recessed portion 71 that houses at least the tip side of the protruding portion 61. A part on the tip side of the protruding portion 61 and a part of the bottom surface of the recessed portion 71 are joined at the joint portion 75. The first passage portion 76 and the second passage portion 77 are provided between the protruding portion 61 and the recessed portion 71, the first passage portion 76 being radially adjacent to the joint portion 75, the second passage portion 77 communicating with the opposite side to the joint portion side in the radial direction with respect to the first passage portion 76 and having a maximum length in the axial direction smaller than the maximum length in the axial direction of the first passage portion 76.

Accordingly, since the second passage portion 77 having a maximum length in the axial direction smaller than the maximum length in the axial direction of the first passage portion 76 is provided on the opposite side to the joint portion 75 side in the radial direction with respect to the first passage portion 76, the heat can be efficiently absorbed by axially facing surfaces on both sides in the axial direction in the second passage portion 77 having a small axial length.

Since the axial thicknesses of a portion of the terminal cap 27 and a portion of the upper current collector plate 50 that axially overlap with the second passage portion 77 can be increased, the thermal capacities of these portions can be increased and the heat quantity absorbed by these portions can be increased. Accordingly, since also for this reason, the flame extinguishing phenomenon can be effectively generated, even if the flame is generated during laser welding, the flame can be extinguished in a short time, and the cylindrical battery can be provided with high quality.

The first passage portion 76 and the second passage portion 77 are provided on both sides in the radial direction of the joint portion 75. Accordingly, a radial existence range of the second passage portion 77 can be increased, and the flame extinguishing phenomenon can be further effectively generated.

Furthermore, the second passage portion 77 includes a passage part 81 surrounded by the zigzag-formed first line 78 that repeats irregularities and the zigzag-formed second line 79 that repeats irregularities, to proceed in a zigzag pattern. Accordingly, the length of the path of the passage part 81 that proceeds in a zigzag pattern can be increased and the surface area of the passage part 81 can be increased. Therefore, since the heat can be further effectively absorbed by the passage part 81 that proceeds in a zigzag pattern, the flame extinguishing phenomenon can be further effectively generated.

Note that when a metal component is produced, irregularities may be formed on the surface of the metal component due to transfer of polishing marks of a mold or rolling roller to the material, but in the technique of the present disclosure, the surface of the positive electrode cap and the surface of the upper current collector plate need to approach each other in the axial direction so that the approaching surfaces can be provided over a wide region. Therefore, the axial length of the protruding portion of the passage part 81 that proceeds in a zigzag pattern is preferably longer than the axial length of the protruding portion in the irregularities based on the polishing marks of the mold or rolling roller, and for example, the axial length of the protruding portion of the passage part 81 is preferably greater than or equal to 0.05 mm and less than or equal to 1.5 mm, and the axial length of the protruding portion of the passage part 81 is further preferably greater than or equal to 0.1 mm or less than or equal to 1.0 mm.

### [Flame Extinguishing Effect Confirmation Inspection]

Regarding the cylindrical battery of a comparative example and the cylindrical batteries of Examples 1 to 4, the present or absence of the flame extinguishing effect was confirmed.

### <Cylindrical Battery of Comparative Example>

A cylindrical battery was produced in which only first passage portion 76 was provided and no second passage portion 77 was provided for comparison with the cylindrical battery 10 of the above-described embodiment in which the terminal cap 27 and the upper current collector plate 50 were joined by the above-described laser welding. More specifically, a cylindrical battery was produced in which an extension of the first passage portion 76 was provided at a radial position at which the second passage portion 77 exists for comparison with the cylindrical battery 10 of the above-described embodiment. The axial length of the first passage portion 76 was 2 mm.

### <Cylindrical Battery of Example 1>

The cylindrical battery 10 of the above-described embodiment was produced. The terminal cap 27 and the upper current collector plate 50 were joined by the above-described laser welding. The axial length of the second passage portion 77 that proceeds in a zigzag pattern was 0.1 mm.

### <Cylindrical Battery of Example 2>

The cylindrical battery 10 of the above-described embodiment was produced. The terminal cap 27 and the upper current collector plate 50 were joined by the above-described laser welding. The axial length of the second passage portion 77 that proceeds in a zigzag pattern was 0.5 mm.

### <Cylindrical Battery of Example 3>

The cylindrical battery 10 of the above-described embodiment was produced. The terminal cap 27 and the upper current collector plate 50 were joined by the above-described laser welding. The axial length of the second passage portion 77 that proceeds in a zigzag pattern was 1.0 mm.

### <Cylindrical Battery of Example 4>

The cylindrical battery 10 of the above-described embodiment was produced. The terminal cap 27 and the upper current collector plate 50 were joined by the above-described laser welding. The axial length of the second passage portion 77 that proceeds in a zigzag pattern was 1.5 mm.

### [Flame Extinguishing Effect Confirmation Method]

The presence or absence of evidence of burning was confirmed. Specifically, the presence or absence of a discolored portion around the welded portion formed by the laser welding was confirmed. The amount of water in each cylindrical battery was measured. When a hydrocarbon generated by the vaporization of the electrolyte solution is burned, the water is generated. Therefore, when the amount of water is measured, the present or absence of burning can be determined.

### [Inspection Results]

The inspection results are shown in Table 1.

**[Table 1]**

| | Gap dimension (mm) | Presence or absence of discoloration | Amount of water (ppm) | Presence or absence of burned marks |
|---|---|---|---|---|
| Comparative example | 2 | Present | 10 ppm | Present |
| Example 1 | 0.1 | Absent | Not detected | Absent |
| Example 2 | 0.5 | Absent | Not detected | Absent |
| Example 3 | 1.0 | Absent | Not detected | Absent |
| Example 4 | 1.5 | Absent | Not detected | Absent |

As shown in Table 1, the burned marks could not be confirmed in all of the cylindrical batteries (cylindrical batteries of Examples 1 to 4) in which the second passage portion 77 that proceeds in a zigzag pattern was formed. That is, in the cylindrical batteries of Examples 1 to 4, it was confirmed that the burning did not occur or the flame could be extinguished in a short time even if the flame was generated. Note that as described above, when the second passage portion is provided, the flame extinguishing effect can be improved regardless of the maximum length in the axial direction of the second passage portion. When the maximum length in the axial direction of the second passage portion is greater than or equal to 0.1 mm, the heat can be effectively absorbed by the inner surface of the second passage portion, which is thus preferable. When the maximum length in the axial direction of the second passage portion is less than or equal to 1 mm, the flame extinguishing phenomenon can be effectively generated, which is thus preferable. When the radial dimension of the existence range of the second passage portion is greater than or equal to 0.2 mm, the contact area of a portion where the heat can be effectively absorbed can be increased and the flame extinguishing effect can be improved, which is thus preferable. When the radial dimension of the existence range of the second passage portion is less than or equal to 1 mm, a compact cylindrical battery in which the radial dimension is small can be easily produced, which is thus preferable.

The present disclosure is not limited to the above embodiment and modified examples thereof, and various improvements and changes are possible within the matters described in the claims of the present application and the scope of equivalence of claims.

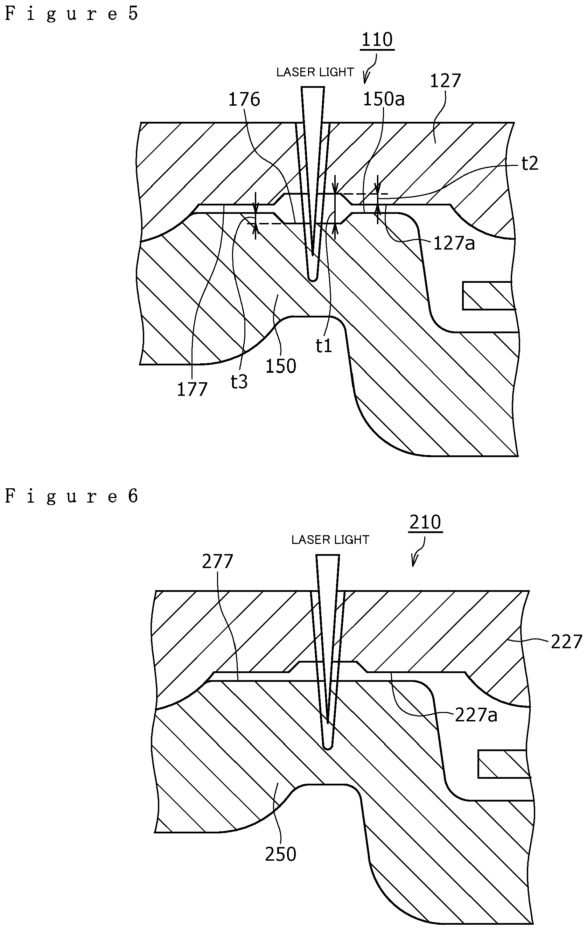

For example, in the above-described embodiment, the second passage portion 77 included the passage part 81 that proceeds in a zigzag pattern. However, the second passage portion need not include the passage part that proceeds in a zigzag pattern. Specifically, as illustrated in FIG. 5, that is, an enlarged schematic sectional view corresponding to FIG. 4 in the cylindrical battery 110 of a modified example, in the cross section including the axial direction of a cylindrical battery 110, a second passage portion 177 may have a linear shape.

Even if the second passage portion 177 does not include the passage part that proceeds in a zigzag pattern as in the cylindrical battery 110, the axial length of the second passage portion 177 is reduced, which makes it possible to effectively absorb the heat by the inner surface of the second passage portion 177 and improve the flame extinguishing effect. In addition, since the thickness of the portion of the terminal cap 127 that axially overlaps with the second passage portion 177 and the thickness of the portion of the upper current collector plate 150 that axially overlaps with the second passage portion 177 can be increased, the thermal capacities of these portions can be also increased. Therefore, for this reason, the flame extinguishing effect can be improved.

In the cylindrical battery 110, the portion of the terminal cap 127 that axially overlaps with the second passage portion 177 has a projecting portion 127a that projects toward the axially lower side. Furthermore, the portion of the upper current collector plate 150 that axially overlaps with the second passage portion 177 has a projecting portion 150a that projects toward the axially upper side. Then, the axial length of the first passage portion 176 is defined as t1, the axial thickness of the projecting portion 127a is defined as t2, and the axial thickness of the projecting portion 150a is defined as t3, t1 > (t2 + t3) is established.

However, when the second passage portion is formed, the projecting portions may be provided in only one of a portion of the terminal cap that axially overlaps with the second passage portion and a portion of the upper current collector plate that axially overlaps with the second passage portion. For example, as illustrated in FIG. 6, that is, an enlarged schematic sectional view corresponding to FIG. 4 in a cylindrical battery 210 of another modified example, a projecting portion 227a that projects toward the axially lower side is provided in a portion of the terminal cap 227 that axially overlaps with the second passage portion 277, whereas the projecting portion that projects toward the axially upper side need not be provided in a portion of the upper current collector plate 250 that axially overlaps with the second passage portion 277. In this way, good flame extinguishing performance can be achieved.

A case has been described where the first passage portion 76 and the second passage portion 77 are provided on both sides in the radial direction of the joint portion 75 provided by laser welding. However, the first passage portion and the second passage portion may be provided on only one side in the radial direction of the joint portion provided by laser welding. In addition, a case has been described where the cylindrical battery 10 comprises only one annular insulating plate 18 on the upper side of the electrode assembly 14. However, the cylindrical battery may comprise another insulating plate between the annular insulating plate and the electrode assembly, or may comprise two insulating plates disposed in duplicate on the upper side of the electrode assembly.

A case has been described where the negative electrode current collector exposed portion 41 is joined to the lower current collector plate 52 and the lower current collector plate 52 is joined to the bottom plate portion 68 of the exterior housing can 16, resulting in reduction in electrical resistance of the cylindrical battery 10. However, a configuration in which the negative electrode current collector exposed portion 41 is joined to the lower current collector plate 52 need not be used. For example, the negative electrode lead extending from a portion on a radial inner side of the negative electrode current collector exposed portion is joined to the can bottom and the outer circumferential surface of the electrode assembly is formed by the negative electrode current collector in which the negative electrode mixture layer is not provided, so that the negative electrode current collector forming the outer circumferential surface of the electrode assembly can be brought into contact with the cylindrical inner circumferential surface of the exterior housing can. In this way, the electrical resistance of the cylindrical battery can be reduced. A case has been described where the terminal cap 27 serves as the positive electrode and the exterior housing can 16 serves as the negative electrode. However, the polarity may be reversed, so that the terminal cap serves as the negative electrode and the exterior housing can serves as the positive electrode.

### REFERENCE SIGNS LIST

10, 110, 210 Cylindrical battery, 11 Positive electrode, 12 Negative electrode, 13 Separator, 14 Electrode assembly, 16 Exterior housing can, 17 Sealing assembly, 18 Insulating plate, 20 Positive electrode lead, 27, 127, 227 Terminal cap, 28 Gasket, 40 Negative electrode current collector, 41 Negative electrode current collector exposed portion, 42 Negative electrode mixture layer, 50, 150, 250 Upper current collector plate, 51 Metal plate, 52 Lower current collector plate, 60 First annular portion, 61 Protruding portion, 62 Step portion, 63 Second annular portion, 68 Bottom plate portion, 69 Thin thickness portion, 71 Recessed portion, 75 Joint portion, 76, 176 First passage portion, 77, 177, 277 Second passage portion, 78 First line, 79 Second line, 81 Passage part that proceeds in zigzag pattern, 127a, 227a Projecting portion of terminal cap, 150a Projecting portion of upper current collector plate

## Claims

1. A cylindrical battery, comprising;
an electrode assembly;
a bottomed cylindrical exterior housing can that houses the electrode assembly;
a terminal cap that has a terminal exposed to an outside;
a plurality of electrode leads that extend from the electrode assembly; and
a current collector to which the plurality of electrode leads are joined, wherein
the current collector plate has a protruding portion that projects on the terminal cap side in an axial direction, and the terminal cap has a recessed portion that houses at least a tip side of the protruding portion,
a joint portion is provided that joins a part on the tip side of the protruding portion and a part of a bottom surface of the recessed portion, and
a first passage portion and a second passage portion are provided between the protruding portion and the recessed portion, the first passage portion being radially adjacent to the joint portion, the second passage portion communicating with an opposite side to the joint portion side in the radial direction with respect to the first passage portion and having a maximum length in the axial direction smaller than a maximum length in the axial direction of the first passage portion.

2. The cylindrical battery according to claim 1, wherein
the first passage portion and the second passage portion are provided on both sides in a radial direction of the joint portion.

3. The cylindrical battery according to claim 1 or 2, wherein
in a cross section including the axial direction, the second passage portion has a linear shape.

4. The cylindrical battery according to claim 1 or 2, wherein
in a cross section including the axial direction, the second passage portion includes a passage part surrounded by a zigzag-formed first line that repeats irregularities and a zigzag-formed second line that repeats irregularities, and
protruding portions of the first line face recessed portions of the second line in the axial direction, and recessed portions of the first line face protruding portions of the second line in the axial direction.
